# EUROPEAN PATENT SPECIFICATION

(11) **EP 4 329 070 B1**
(45) Date of publication and mention of the grant of the patent: **05.11.2025**
(21) Application number: 22825346.4
(22) Date of filing: 16.06.2022
(51) Int. Cl.: H01M 50/317, H01M 10/48

(54) **VENT SEALING CAP FOR SECONDARY BATTERY AND SECONDARY BATTERY COMPRISING SAME**
ENTLÜFTUNGSDICHTUNGSKAPPE FÜR SEKUNDÄRBATTERIE UND SEKUNDÄRBATTERIE DAMIT
CAPUCHON D'ÉTANCHÉITÉ D'ÉVENT POUR BATTERIE SECONDAIRE ET BATTERIE SECONDAIRE LE COMPRENANT

(30) Priority: 18.06.2021 KR 20210079632; 15.06.2022 KR 20220072951
(43) Date of publication of application: 28.02.2024
(73) Proprietor: LG Energy Solution, Ltd., Seoul 07335 (KR)
(72) Inventor: OH, Sang Seung, Daejeon 34122 (KR); LIM, Sung Chul, Daejeon 34122 (KR)
(74) Representative: Plasseraud IP
(86) International application number: PCT/KR2022/008536
(87) International publication number: WO 2022/265423

(56) References cited:
- CN-A- 105 006 537
- JP-A- 2006 040 626
- KR-A- 20120 069 104
- KR-A- 20120 069 104
- KR-A- 20130 038 499
- KR-A- 20160 109 513
- KR-A- 980 012 697

## Description

### TECHNICAL FIELD

The present invention relates to a vent sealing cap for a secondary battery and a secondary battery including the same, and more particularly, to a vent sealing cap for a secondary battery, which is capable of preventing oxygen from being introduced reversely after a gas generated in the secondary battery is discharged to the outside to prevent the secondary battery from being ignited and improve safety, and a secondary battery including the same.

### BACKGROUND ART

In general, secondary batteries mean batteries that are chargeable and dischargeable unlike primary batteries that are not chargeable, and the secondary batteries are widely used for power of electronic devices such as mobile phones, notebook computers, camcorders, and the like, electric vehicles, and the like.

In general, secondary batteries include nickel-cadmium batteries, nickel-hydrogen batteries, lithium ion batteries, and lithium ion polymer batteries. Such a secondary battery is being applied to be used in small-sized products such as digital cameras, notebooks, mobile phones, PDAs, E-bikes, and the like as well as large-sized products requiring high power such as electric vehicles and hybrid vehicles, power storage devices for storing surplus power or renewable energy, and backup power storage devices.

Such a secondary battery is classified into a pouch-type secondary battery and a can type secondary battery according to a material of a battery case accommodating an electrode assembly. In the pouch-type secondary battery, the electrode assembly is accommodated in a pouch made of a flexible polymer material having a variable shape. In addition, in the can type secondary battery, an electrode assembly is accommodated in a case made of a metal or plastic material having a predetermined shape.

As described above, the electrode assembly is accommodated in the battery case, and an electrolyte is injected and then sealed to operate as a battery. In the secondary battery, a gas is generated during the charging and discharging processes. Particularly, when the battery is overcharged, or short circuit occurs in the battery, the gas is excessively generated in the battery to increase in pressure within the battery case, thereby deteriorating performance of the battery.

Accordingly, a process or device for performing ventilation for discharging the internal gas to the outside is essentially required for the secondary battery. However, during the venting process of the secondary battery, external air is sometimes introduced into the inside of the battery. In this case, not only the performance of the battery is deteriorated, but also oxygen reacts inside the battery, leading to ignition or explosion of the battery, thereby seriously threatening safety of a user.

Accordingly, there is a need to develop a means for regulating the internal pressure of the battery by properly preventing the external air from being introduced while discharging the gas generated inside the battery to the outside.

Documents KR 2012/0069104 A and CN 105006537 A disclose vent sealing caps for secondary batteries.

### DISCLOSURE OF THE INVENTION

### TECHNICAL PROBLEM

The present invention has been devised to solve the above problems, and an object of the present invention is provide a vent sealing cap for a secondary battery, which is capable of preventing oxygen from being introduced reversely after a gas generated in the secondary battery is discharged to the outside to prevent the secondary battery from being ignited and improve safety, and a secondary battery including the same.

### TECHNICAL SOLUTION

To this end, the invention relates to a vent sealing cap for a secondary battery according to claim 1.

The vent sealing cap after the invention may present one or more feature of dependent claims 2 to 13, in any combination allowed by the claims.

The invention also relates to a secondary battery according to claim 14.

### ADVANTAGEOUS EFFECTS

In the vent sealing cap for the secondary battery and the secondary battery including the same according to the present invention, the vent sealing cap may include the body having the hollow therein, the intake port provided on the body, the exhaust port provided above the position, in which the intake port is provided, in the body, and the opening/closing member that is provided in the hollow within the body to open or close the connection between the intake port and the exhaust port while moving by the change in pressure of the intake port. Therefore, the vent sealing cap may prevent the oxygen from being introduced reversely after the gas generated in the secondary battery is discharged to the outside to prevent the secondary battery from being ignited and improve the safety.

### BRIEF DESCRIPTION OF THE DRAWINGS

FIG. 1 is a side cross-sectional view of a vent sealing cap for a secondary battery according to Embodiment 1 of the present invention.
FIG. 2 is a view illustrating a process of performing ventilation in the vent sealing cap for the secondary battery according to Embodiment 1 of the present invention.
FIG. 3 is a cross-sectional view taken along line A-A' in the vent sealing cap for the secondary battery of FIG. 1.
FIG. 4 is a side cross-sectional view of a vent sealing cap for a secondary battery according to Embodiment 2 of the present invention.
FIG. 5 is a view illustrating a process of performing ventilation in the vent sealing cap for the secondary battery according to Embodiment 2 of the present invention.
FIG. 6 is a side cross-sectional view illustrating a state in which an intake port is formed on a bottom surface of a stopping part in the vent sealing cap for the secondary battery according to Embodiment 2 of the present invention.
FIG. 7 is a perspective view of a secondary battery according to Embodiment 3 of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

### Embodiment 1

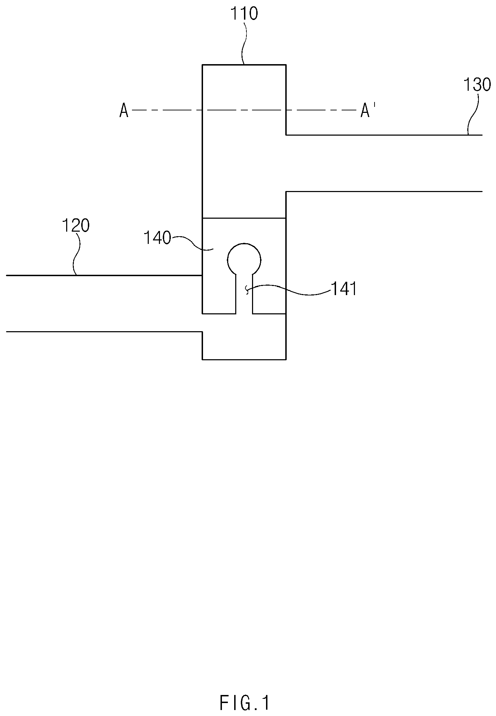

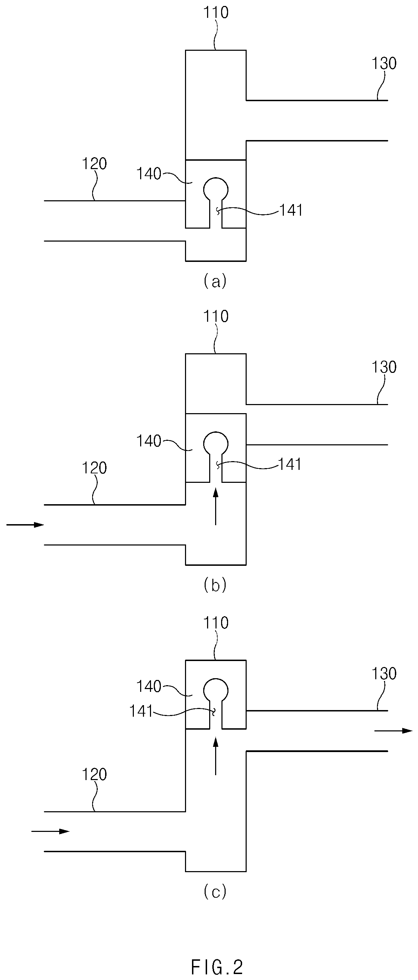

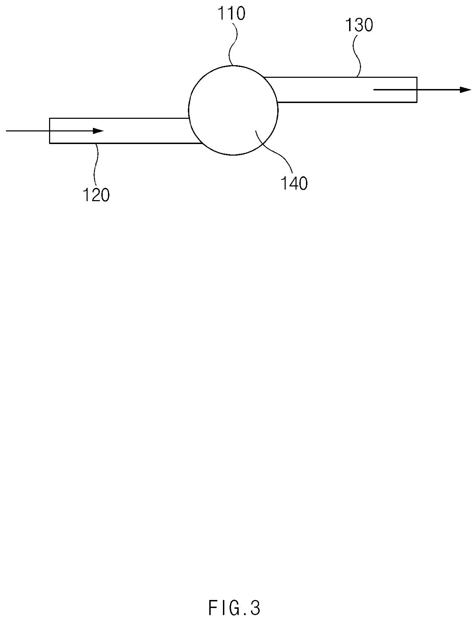

FIG. 1 is a side cross-sectional view of a vent sealing cap for a secondary battery according to Embodiment 1 of the present invention. FIG. 2 is a view illustrating a process of performing ventilation in the vent sealing cap for the secondary battery according to Embodiment 1 of the present invention. FIG. 3 is a cross-sectional view taken along line A-A' in the vent sealing cap for the secondary battery of FIG. 1.

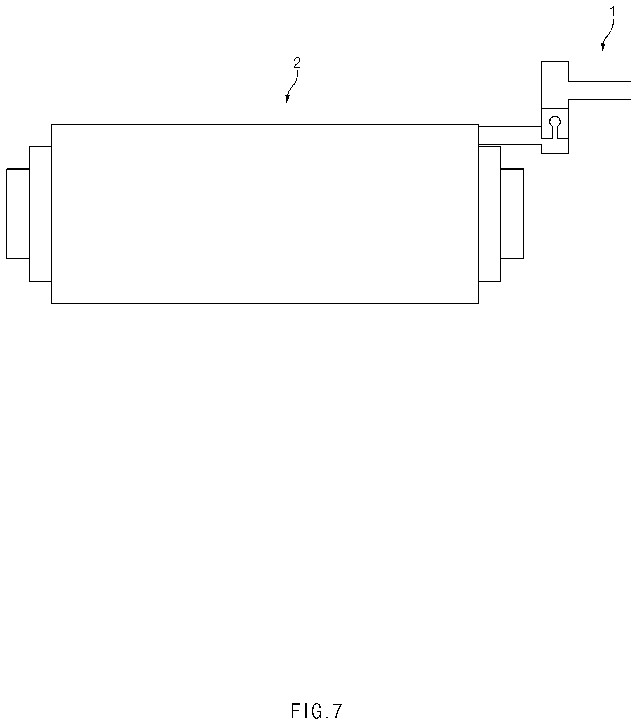

Referring to FIG. 1, a vent sealing cap 1 for a secondary battery according to Embodiment 1 of the present invention includes a body 110, an intake port 120, an exhaust port 130, and an opening/closing member 140. The vent sealing cap 1 for the secondary battery according to the present invention may be provided in a battery case of the secondary battery (see FIG. 7), and in this case, the vent sealing cap 1 may serve to discharge a gas within the battery case to the outside.

The body 110 of the vent sealing cap 1 for the secondary battery has a hollow formed therein, and the intake port 120 and the exhaust port 130 are provided on the body 110. Here, the exhaust port 130 is disposed above a position, at which the intake port 120 is provided, on the body 110. The intake port 120 is connected to the inside of the battery case so that air is introduced into the body 110 from the battery case of the secondary battery, and the air introduced into the intake port 120 is discharged through the exhaust port 130 via the body 110.

Referring to FIG. 2, the opening/closing member 140 of the vent sealing cap 1 for the secondary battery according to Embodiment 1 of the present invention is provided in the hollow inside of the body 110 to open or close connection between the intake port 120 and the exhaust port 130 while moving inside the hollow by a change in pressure of the intake port 120. Here, the opening of the connection between the intake port 120 and the exhaust port 130 means that the opening/closing member 140 moves above the body 110 to open a flow of the air between the intake port 120 and the exhaust port 130 (see FIG. 2(c)), and the closing of the connection between the intake port 120 and the exhaust port 130 means that the opening/closing member 140 is provided between the intake port 120 and the exhaust port 130 in the hollow within the body 110 to block the flow of the air between the intake port 120 and the exhaust port 130 (see FIGS. 2(a) and 2b)).

As described above, in the vent sealing cap 1 for the secondary battery according to Embodiment 1 of the present invention, when the gas is generated in the secondary battery to increase in internal pressure, the generated internal gas may be discharged to the outside, and when the pressure decreases due to the discharge of the gas, the vent sealing cap 1 may be closed to prevent the air from being reversely introduced, thereby preventing ignition or explosion from occurring due to reaction of oxygen inside the battery and improving the safety of the battery.

Hereinafter, each of configurations of the body 110, the intake port 120, the exhaust port 130, and the opening/closing member 140 will be described in detail with reference to FIGS. 1 and 2.

As illustrated in FIG. 1, the body 110 may be formed in a pillar shape having a height and have a hollow so that a fluid therein is movable. In addition, the opening/closing member 140 to be described later may be inserted into the hollow within the body.

A transverse cross-section of the body 110 may be formed in a polygonal shape or may be formed in a circular shape. As described above, when the transverse cross section of the body 110 is formed in the circular shape, a spiral guide groove may be formed in an inner circumferential surface of the body 110, and a guide protrusion formed on the opening/closing member 140 to be described later may be inserted into the guide groove so that the opening/closing member 140 is elevated while rotating. As described above, the opening/closing member 140 may be elevated by a pressure of the intake port 120 while improving sealing force of the opening/closing member 140 by the spiral guide groove formed in the inner circumferential surface of the body 110 and the spiral guide protrusion formed on the outer circumferential surface of the opening/closing member 140, and as necessary, the opening/closing member 140 may be utilized as a means to adjust the pressure for generating the ventilation.

The intake port 120 may be provided on the body 110, and in particular, may be provided on a side surface of the body 110. Since the vent sealing cap 1 for the secondary battery according to the present invention has a structure that uses a self-weight of the opening/closing member 140 provided inside the body 110, the vent sealing cap 1 has to be provided in an erected state to be affected by the gravity. However, when the intake port 120 is provided on a bottom surface of the body 110, in the body 110 of the vent sealing cap 1, a case in which a placed shape of the secondary battery and the vent sealing cap 1 are not provided in the erected state according to a position at which the battery case is provided.

Therefore, in order to prevent this, the intake port 120 may be provided on a side surface of the body 110, and as a result, regardless of the placed shape of the secondary battery or the position at which the vent sealing cap 1 is provided in the battery case, the body 110 of the vent sealing cap 1 may be provided in the erected state to be affected by the gravity, and thus, the opening and closing functions by the opening/closing member 140 of the present invention may be normally performed.

The intake port 120 may be provided in the form of a hose connected to the body 110 and may be configured to be introduced from the outside to the inside of the body 110. Therefore, when the intake port 120 is connected to the battery case at a side opposite to a side at which the intake port 120 is connected to the body 110, the gas generated in the battery case may be introduced into the body 110 through the intake port 120.

The intake port 120 may include a member that absorbs heat to be contracted (hereinafter, referred to as a 'heat shrink member'). In detail, the heat shrink member may be provided at a portion adjacent to a portion of the intake port 120, which is provided on the body 110. Thus, the gas heated inside the battery case may move through the intake port 120, and then, the intake port 120 may be contracted by heat to prevent external air of the vent sealing cap 1 from being introduced therein.

The exhaust port 130 is provided on the side surface of the body 110 and may be provided above the position at which the intake port 120 is provided. As described above, since the exhaust port 130 is provided on the side surface of the body 110, even if the opening/closing member 140 provided in the hollow of the body 110 ascends by the pressure of the intake port 120, the exhaust port 130 may not be closed but be opened to exhaust the air. In addition, since the exhaust port 130 is provided above the position at which the intake port 120 is provided, when the pressure of the intake port 120 increases, the opening/closing member 140 may ascend to form a structure to open the exhaust port 130.

Referring to FIG. 3, the exhaust port 130 may be provided on an axis different from an axis on which the intake port 120 is provided, based on the transverse cross-section of the body 110. As described above, when the axes of the intake port 120 and the exhaust port 130 are formed to be misaligned with each other, it is possible to minimize the reverse introduction of the gas after the gas is exhausted or discharged to the exhaust port 130 of the vent sealing cap 1. However, the intake port 120 and the exhaust port 130 are not necessarily limited to being provided on the different axes and thus may be placed on the same axis.

The exhaust port 130 may include an alarm generation device that generates a signal by sensing a flow of the gas. The alarm generation device includes various devices for generating a sound signal, a visual signal, and the like and may be a device commonly used in the art. For example, the sound signal may generate an alarm sound, and the visual signal may be a signal indicating that the ventilation is generated in the vent sealing cap 1 or a battery module connected thereto, a pack, or an instrument panel of a vehicle in which a battery is installed.

Next, the opening/closing member 140 will be described in detail with reference to FIGS. 1 and 2.

The opening/closing member 140 is provided in the hollow inside of the body 110 and may be, for example, a member made of a metal such as a weight having a sufficient weight. As described above, the opening/closing member 140 has a self-weight and may open or close the connection between the intake port 120 and the exhaust port 130 while moving through the inner hollow of the body 110 by the change in pressure of the intake port 120.

When the pressure of the intake port 120 is greater than a preset value, the opening/closing member 140 may open the connection between the intake port 120 and the exhaust port 130, and when the pressure of the intake port 120 is less than the preset value, the opening/closing member 140 may close the connection between the intake port 120 and the exhaust port 130.

Here, the preset value is a value obtained by adding a value, which is obtained by dividing the weight of the opening/closing member 140 by a unit area of the opening/closing member 140, to a value of a pressure applied to a volume of a space disposed in an upper portion of the hollow of the body 110 sealed by the opening/closing member 140 in a state in which the opening/closing member 140 ascends in the hollow within the body 110 so that a bottom surface of the opening/closing member 140 and a bottom surface of the exhaust port 130 coincide with each other.

The opening/closing member 140 of the vent sealing cap 1 for the secondary battery according to the present invention includes an elevation assistance groove 141 that is opened toward the gas inflow direction through the intake port 120 and has a shape recessed toward a central portion of the opening/closing member 140. As described above, when the elevation assistance groove 141 is formed in a center of the opening/closing member 140 as described above, an area that is subjected to upward force increases, and thus, the opening/closing member 140 may more easily ascend in the hollow within the body 110, and also, the opening/closing member 140 may ascend even with a small internal pressure or a change in pressure of the intake port 120 to cause the ventilation.

In particular, the elevation assistance groove 141 may be formed in a hairpin structure including an inlet, through which the gas is introduced, and a head having a spherical diameter larger than a width of the inlet, and a size of the area subjected to an upward pressure by the head may increase.

In addition, the opening/closing member 140 may have the spiral guide protrusion formed on the outer circumferential surface as described above, and the guide protrusion may be inserted into the guide groove of the body 110 so that the opening/closing member 140 is elevated while rotating. As described above, the opening/closing member 140 may be elevated by a pressure of the intake port 120 while improving sealing force of the opening/, closing member 140 by the spiral guide groove formed in the inner circumferential surface of the body 110 and the spiral guide protrusion formed on the outer circumferential surface of the opening/closing member 140, and as necessary, the opening/closing member 140 may be utilized as a means to adjust the pressure for generating the ventilation.

The above-described vent sealing cap 1 for the secondary battery may be made of various materials. Specifically, the body 110, the intake port 120, the exhaust port 130, or the opening/closing member 140 of the vent sealing cap 1 for the secondary battery may be made of various materials.

Here, at least one of the body 110, the intake port 120, the exhaust port 130, or the opening/closing member 140 may undergo mechanical or chemical deformation even when a high-temperature gas is discharged from the inside of the secondary battery, and thus, it may be preferable that the at least one of the body 110, the intake port 120, the exhaust port 130, or the opening/closing member 140 is made of a high heat-resistant material so that physical properties are not significantly deteriorated.

In addition, at least one of the body 110, the intake port 120, the exhaust port 130, or the opening/closing member 140 may be ruptured to be deformed when the internal gas pressure is greater than or equal to a predetermined pressure, and thus, it may be preferable that the at least one of the body 110, the intake port 120, the exhaust port 130, or the opening/closing member 140 is made of a material that withstands a predetermined pressure. Here, the predetermined pressure may be various pressure values and may be, for example, 7 bar or more.

That is, the body 110, the intake port 120, the exhaust port 130, or the opening/closing member 140 may be made of any material as long as the material satisfies any one of the above-described conditions. For example, at least one of the body 110, the intake port 120, the exhaust port 130, or the opening/closing member 140 may include a high heat-resistant plastic type of poly phenylene sulfide (PPS) and poly imide (PI) or may include aluminum (Al) or stainless steel (SUS), which are metal materials.

### Embodiment 2

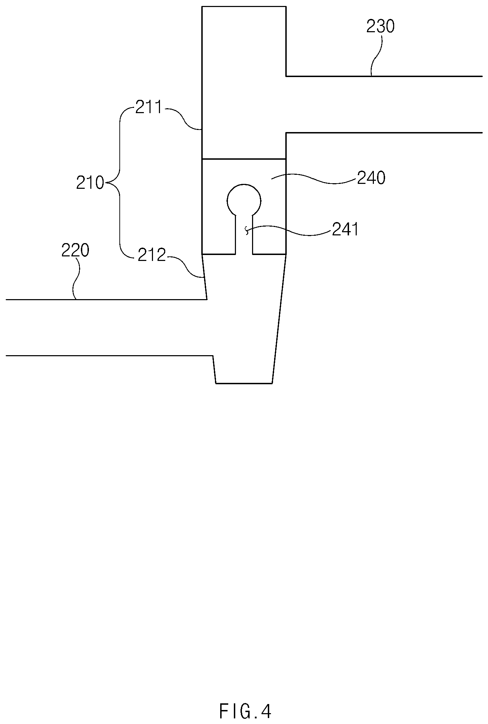

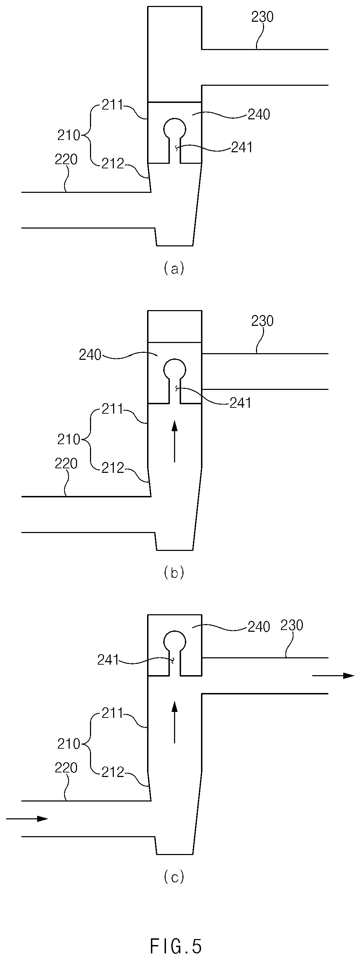

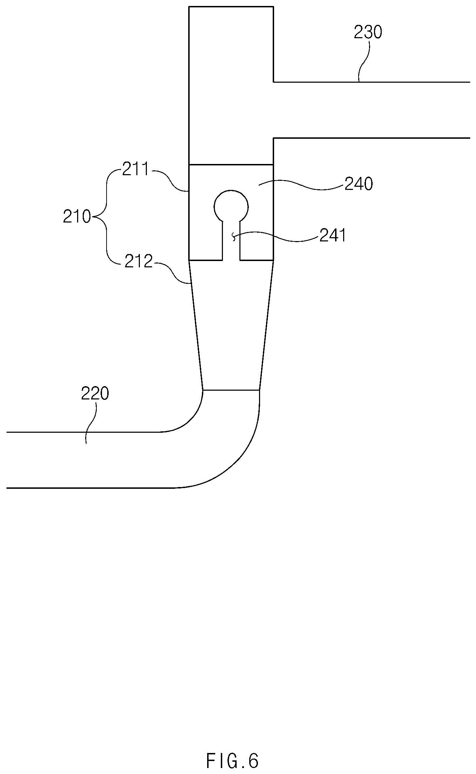

FIG. 4 is a side cross-sectional view of a vent sealing cap for a secondary battery according to Embodiment 2 of the present invention. FIG. 5 is a view illustrating a process of performing ventilation in the vent sealing cap for the secondary battery according to Embodiment 2 of the present invention. FIG. 6 is a side cross-sectional view illustrating a state in which an intake port is formed on a bottom surface of a stopping part in the vent sealing cap for the secondary battery according to Embodiment 2 of the present invention.

Embodiment 2 of the present invention is different from Embodiment 1 in that a body 210 according to Embodiment 1 includes a movable part 211 and a stopping part 212.

The contents that are duplicated with Embodiment 1 will be omitted as much as possible, and Embodiment 2 will be described with a focus on the differences. That is, it is obvious that the contents that are not described in Embodiment 2 may be regarded as the contents of Embodiment 1 if necessary.

Referring to FIG. 4, a body 210 of a vent sealing cap for a secondary battery according to Embodiment 2 of the present invention includes a movable part 211 and a stopping part 212.

The movable part 211 is formed so that a cross-sectional area of a hollow of the body 210 is the same as a transverse cross-sectional area of the opening/closing member 240 so that the opening/closing member 240 moves in a sealed state. The stopping part 212 may be provided to be connected to a lower portion of the moving part 211 and has a hollow having a cross-sectional area less than the transverse cross-section of the opening/closing member 240 to prevent the opening/closing member 240 from moving downward by a self-weight thereof, thereby preventing the body 210 from being seated on a bottom surface of the body 210.

The stopping part 212 may be formed so that the cross-sectional area of the hollow is less than the transverse cross-section of the opening/closing member 240 and may be provided to have a height difference while forming a right angle with respect to the movable part 211 or may be provided in a shape, in which an area of an upper side connected to the movable part 211 is the same as the movable part 211, and an area gradually decreases downward.

In Embodiment 2 of the present invention, an exhaust port 230 may be formed on a side surface of the movable part 211, and an intake port 220 may be formed on a side surface of the stop part 212. Also, as illustrated in FIG. 6, the exhaust port 230 may be formed on the side surface of the movable part 211, and the intake port 220 may be formed on a bottom surface of the stopping part 212. As described above, when the intake port 220 is formed on the bottom surface of the stopping part 212, the opening/closing member 240 may more easily ascend when a gas is introduced from the intake port 220.

In the vent sealing cap for the secondary battery according to Embodiment 2 of the present invention, a process of generating ventilation by opening or closing connection between the intake port 220 and the exhaust port 230 may be opened or closed by the elevation of the opening/closing member 240 is illustrated in FIG. 5, and this process may be understood as being the same as the operation in Embodiment 1.

### Embodiment 3

FIG. 7 is a perspective view of a secondary battery according to Embodiment 3 of the present invention.

Embodiment 3 of the present invention is different from Embodiments 1 and 2 in that this embodiment relates to a secondary battery 2 including the vent sealing cap 1 for the secondary battery according to Embodiment 1 or 2.

The contents that are duplicated with Embodiments 1 and 2 will be omitted as much as possible, and Embodiment 3 will be described with a focus on the differences. That is, it is obvious that the contents that are not described in Embodiment 3 may be regarded as the contents of Embodiments 1 and 2 if necessary.

Referring to FIG. 7, a secondary battery 2 according to Embodiment 3 of the present invention includes an electrode assembly, a battery case, and a vent sealing cap.

The electrode assembly is formed by stacking a positive electrode, a separator, a negative electrode, and a separator. Here, the electrode assembly may be various types of electrode assemblies such as a jelly-roll type formed by winding a long sheet shape, a stack type, in which unit cells cut to a predetermined size are stacked, and a stack/folding type in which unit cells are stacked, and a separator is folded.

As for the battery case, it is sufficient if the electrode assembly is accommodated therein, and for example, any one of a can type and a pouch type including a cylindrical shape or a prismatic shape may be selected.

The vent sealing cap 1 may be provided in the battery case. For example, in the case of the pouch type, the vent sealing cap 1 may be provided at a sealing portion to perform a vent function. A body 310 of the vent sealing cap has a hollow formed therein, and an intake port 320 and an exhaust port 330 are provided on the body 310. Here, the exhaust port 330 is disposed above a position, at which the intake port 320 is provided, on the body 310. The intake port 320 is connected to the inside of the battery case so that air is introduced into the body 310 from the battery case, and the air introduced into the intake port 320 is discharged through the exhaust port 330 via the body 310.

The opening/closing member 340 is provided in the hollow inside of the body 310 to open or close connection between the intake port 320 and the exhaust port 330 while moving inside the hollow by a change in pressure of the intake port 320. Here, the opening of the connection between the intake port 320 and the exhaust port 330 may mean that the opening/closing member 340 moves above the body 310 to open a flow of air between the intake port 320 and the exhaust port 330 so that a gas within the battery case is introduced into the vent sealing cap through the intake port 320 and discharged through the exhaust port 330 to cause ventilation, and the closing of the connection between the intake port 320 and the exhaust port 330 may mean that the opening/closing member 340 is provided between the intake port 320 and the exhaust port 330 in the hollow within the body 310 to block the flow of the air between the intake port 320 and the exhaust port 330.

As described above, the secondary battery according to Embodiment 3 of the present invention may include the vent sealing cap, and when the gas is generated in the battery case to increase in internal pressure, the gas generated in the battery case may be discharged to the outside of the battery case, and when the pressure decreases due to the discharge of the gas, the vent sealing cap may be closed to prevent the air from being reversely introduced, thereby preventing the secondary battery from being ignited or exploded due to reaction of oxygen inside the battery case and improving safety of the secondary battery.

The body 310, the intake port 320, and the exhaust port 330, which are other components according to Embodiment 3 of the present invention, may be understood as the same as those described in Embodiments 1 and 2.

The opening/closing member includes an elevation assistance groove that is opened toward a gas inflow direction through the intake port and has a shape recessed toward a central portion of the opening/closing member. In addition, the elevation assistance groove may be formed in a hairpin structure including an inlet, through which the gas is introduced, and a head having a spherical shape having a diameter greater than a width of the inlet.

### [Description of the Symbols]

1: Vent sealing cap for secondary battery
110: Body
120: Intake port
130: Exhaust port
140: Opening/closing member
141: Elevation assistance groove
210: Body
211: Movable part
212: Stopping part
220: Intake port
230: Exhaust port
240: Opening/closing member
310: Body
320: Intake port
330: Exhaust port
340: Opening/closing member
2: Secondary battery

## Claims

1. A vent sealing cap (1) for a secondary battery, comprising:
a body (110, 210) having a hollow therein;
an intake port (120, 220) provided on the body (110, 210);
an exhaust port (130, 230) provided above a position, at which the intake port (120, 220) is disposed, on the body (110, 210); and
an opening/closing member (140, 240) provided in the hollow within the body (110, 210) to open or close connection between the intake port (120, 220) and the exhaust port (130, 230) while moving by a change in pressure of the intake port (120, 220),
**characterized in that** the opening/closing member (140, 240) comprises an elevation assistance groove (141, 241) that is opened in a direction, in which the gas is introduced through the intake port (120, 220), and has a shape recessed toward a central portion of the opening/closing member (140, 240) .

2. The vent sealing cap (1) of claim 1, wherein the intake port (120, 220) is provided on a side surface of the body (110, 210).

3. The vent sealing cap (1) of claim 2, wherein the exhaust port (130, 230) is provided on the side surface of the body (110, 210),
wherein the exhaust port (130, 230) is provided on an axis different from an axis, on which the intake port (120, 220) is provided, with respect to a transverse cross-section of the body (110, 210).

4. The vent sealing cap (1) of claim 1, wherein the opening/closing member (140, 240) opens the connection between the intake port (120, 220) and the exhaust port (130, 230) when the pressure of the intake port (120, 220) is greater than a preset value, and
the opening/closing member (140, 240) closes the connection between the intake port (120, 220) and the exhaust port (130, 230) when the pressure of the intake port (120, 220) is less than the preset value.

5. The vent sealing cap (1) of claim 1, wherein the elevation assistance groove (141, 241) is provided in a hairpin structure comprising an inlet, through which the gas is introduced, and a head having a spherical shape having a diameter greater than a width of the inlet.

6. The vent sealing cap (1) of claim 1, wherein the body (110, 210) has a transverse cross-section having a circular shape.

7. The vent sealing cap (1) of claim 6, wherein a spiral guide groove is formed in an inner circumferential surface of the body (110, 210).

8. The vent sealing cap (1) of claim 7, wherein a spiral guide protrusion is formed on an outer circumferential surface of the opening/closing member (140, 240),
wherein the guide protrusion is inserted into the guide groove of the body (110, 210) so as to be elevated.

9. The vent sealing cap (1) of claim 1, wherein the intake port (120, 220) comprises a member that is contracted by absorbing heat.

10. The vent sealing cap (1) of claim 1, wherein the exhaust port (130, 230) comprises an alarm generation device configured to generate a signal by sensing a flow of the gas.

11. The vent sealing cap (1) of claim 1, wherein the body (110, 210) comprises:
a movable part (211) having a cross-sectional area of the hollow, which is the same as a transverse cross-sectional area of the opening/closing member (140, 240), so that the opening/closing member (140, 240) is movable in a state in which the hollow is sealed; and
a stopping part (212) provided below the movable part (211) and having a cross-sectional area of the hollow, which is less than the transverse cross-sectional area of the opening/closing member (140, 240), so that the movement of the opening/closing member (140, 240) is stopped.

12. The vent sealing cap (1) of claim 11, wherein the exhaust port (130, 230) is formed on a side surface of the movable part (211), and
the intake port (120, 220) is formed on a side surface of the stopping part (212).

13. The vent sealing cap (1) of claim 11, wherein the intake port (120, 220) is formed on a side surface of the movable part (211), and
the intake port (130, 230) is formed on a bottom surface of the stopping part (212).

14. A secondary battery comprising:
an electrode assembly in which a positive electrode, a separator, a negative electrode, and a separator are stacked;
a battery case in which the electrode assembly is accommodated; and
a vent sealing cap (1) according to any one of claims 1 to 13, provided in the battery case.

## Patentansprüche

1. Entlüftungsabdichtungskappe (1) für eine Sekundärbatterie, umfassend:
einen Körper (110, 210), welcher einen Hohlraum darin aufweist;
eine Einlassöffnung (120, 220), welche an dem Körper (110, 210) bereitgestellt ist;
eine Auslassöffnung (130, 230), welche über einer Position, an welcher die Einlassöffnung (120, 220) angeordnet ist, an dem Körper (110, 210) bereitgestellt ist; und
ein Öffnungs-/Schließelement (140, 240), welches in dem Hohlraum in dem Körper (110, 210) bereitgestellt ist, um eine Verbindung zwischen der Einlassöffnung (120, 220) und der Auslassöffnung (130, 230) zu öffnen oder zu schließen, indem es durch eine Druckänderung der Einlassöffnung (120, 220) bewegt wird,
**dadurch gekennzeichnet, dass** das Öffnungs-/Schließelement (140, 240) eine Erhöhungsunterstützungsnut (141, 241) umfasst, welche in einer Richtung geöffnet ist, in welcher das Gas durch die Einlassöffnung (120, 220) eingeführt wird, und eine Form aufweist, welche in Richtung eines zentralen Abschnitts des Öffnungs-/Schließelements (140, 240) vertieft ist.

2. Entlüftungsabdichtungskappe (1) nach Anspruch 1, wobei die Einlassöffnung (120, 220) an einer Seitenfläche des Körpers (110, 210) bereitgestellt ist.

3. Entlüftungsabdichtungskappe (1) nach Anspruch 2, wobei die Auslassöffnung (130, 230) an der Seitenfläche des Körpers (110, 210) bereitgestellt ist,
wobei die Auslassöffnung (130, 230) an einer Achse bereitgestellt ist, welche sich von einer Achse unterscheidet, an welcher die Einlassöffnung (120, 220) bereitgestellt ist, in Bezug zu einem transversalen Querschnitt des Körpers (110, 210).

4. Entlüftungsabdichtungskappe (1) nach Anspruch 1, wobei das Öffnungs-/Schließelement (140, 240) die Verbindung zwischen der Einlassöffnung (120, 220) und der Auslassöffnung (130, 230) öffnet, wenn der Druck der Einlassöffnung (120, 220) größer ist als ein vorfestgelegter Wert, und
das Öffnungs-/Schließelement (140, 240) die Verbindung zwischen der Einlassöffnung (120, 220) und der Auslassöffnung (130, 230) schließt, wenn der Druck der Einlassöffnung (120, 220) geringer ist als der vorfestgelegter Wert.

5. Entlüftungsabdichtungskappe (1) nach Anspruch 1, wobei die Erhöhungsunterstützungsnut (141, 241) in einer Haarnadelstruktur bereitgestellt ist, welche eine Zuführung, durch welche das Gas eingeführt ist, und einen Kopf umfasst, welcher eine sphärische Form aufweist, welche einen Durchmesser aufweist, welcher größer als eine Breite der Zuführung ist.

6. Entlüftungsabdichtungskappe (1) nach Anspruch 1, wobei der Körper (110, 210) einen transversalen Querschnitt aufweist, welcher eine kreisförmige Form aufweist.

7. Entlüftungsabdichtungskappe (1) nach Anspruch 6, wobei eine spiralförmige Führungsnut in einer inneren Umfangsfläche des Körpers (110, 210) gebildet ist.

8. Entlüftungsabdichtungskappe (1) nach Anspruch 7, wobei ein spiralförmiger Führungsvorsprung an einer äußeren Umfangsfläche des Öffnungs-/Schließelements (140, 240) gebildet ist,
wobei der Führungsvorsprung in die Führungsnut des Körpers (110, 210) eingeführt ist, um erhöht zu sein.

9. Entlüftungsabdichtungskappe (1) nach Anspruch 1, wobei die Einlassöffnung (120, 220) ein Element umfasst, welches durch eine Absorptionswärme kontrahiert ist.

10. Entlüftungsabdichtungskappe (1) nach Anspruch 1, wobei die Auslassöffnung (130, 230) eine Warnungserzeugungsvorrichtung umfasst, welche dazu eingerichtet ist, ein Signal durch ein Erfassen einer Strömung des Gases erzeugt.

11. Entlüftungsabdichtungskappe (1) nach Anspruch 1, wobei der Körper (110, 210) umfasst:
einen bewegbaren Teil (211), welcher einen Querschnittsbereich des Hohlraums aufweist, welcher der gleiche ist als der transversale Querschnittsbereich des Öffnungs-/Schließelements (140, 240), sodass das Öffnungs-/Schließelement (140, 240) in einem Zustand bewegbar ist, in welchem der Hohlraum abgedichtet ist; und
einen Stoppteil (212), welcher unter dem bewegbaren Teil (211) bereitgestellt ist und einen Querschnittsbereich des Hohlraums aufweist, welcher geringer als der transversale Querschnittsbereich des Öffnungs-/Schließelements (140, 240) ist, sodass die Bewegung des Öffnungs-/Schließelements (140, 240) gestoppt wird.

12. Entlüftungsabdichtungskappe (1) nach Anspruch 11, wobei die Auslassöffnung (130, 230) an einer Seitenfläche des bewegbaren Teils (211) gebildet ist, und
die Einlassöffnung (120, 220) an einer Seitenfläche des Stoppteils (212) gebildet ist.

13. Entlüftungsabdichtungskappe (1) nach Anspruch 11, wobei die Einlassöffnung (120, 220) an einer Seitenfläche des bewegbaren Teils (211) gebildet ist, und
die Auslassöffnung (130, 230) an einer unteren Fläche des Stoppteils (212) gebildet ist.

14. Sekundärbatterie, umfassend:
eine Elektrodenanordnung, in welcher eine positive Elektrode, ein Separator, eine negative Elektrode und ein Separator gestapelt sind;
ein Batteriegehäuse, in welchem die Elektrodenanordnung untergebracht ist; und
eine Entlüftungsabdichtungskappe (1) nach einem der Ansprüche 1 bis 13, welche in dem Batteriegehäuse bereitgestellt ist.

## Revendications

1. Capuchon d'étanchéité d'évent (1) pour une batterie secondaire, comprenant :
un corps (110, 210) ayant une cavité dans celui-ci ;
un orifice d'admission (120, 220) agencé sur le corps (110, 210) ;
un orifice d'échappement (130, 230) agencé au-dessus d'une position, à laquelle l'orifice d'admission (120, 220) est disposé, sur le corps (110, 210) ; et
un organe d'ouverture/fermeture (140, 240) agencé dans la cavité à l'intérieur du corps (110, 210) pour ouvrir ou fermer une connexion entre l'orifice d'admission (120, 220) et l'orifice d'échappement (130, 230) tout en se déplaçant par un changement de pression de l'orifice d'admission (120, 220),
**caractérisé en ce que** l'organe d'ouverture/fermeture (140, 240) comprend une rainure d'assistance à l'élévation (141, 241) qui est ouverte dans une direction, dans laquelle le gaz est introduit à travers l'orifice d'admission (120, 220), et a une forme en retrait vers une partie centrale de l'organe d'ouverture/fermeture (140, 240).

2. Capuchon d'étanchéité d'évent (1) selon la revendication 1, dans lequel l'orifice d'admission (120, 220) est agencé sur une surface latérale du corps (110, 210).

3. Capuchon d'étanchéité d'évent (1) selon la revendication 2, dans lequel l'orifice d'échappement (130, 230) est agencé sur la surface latérale du corps (110, 210), dans lequel l'orifice d'échappement (130, 230) est agencé sur un axe différent d'un axe, sur lequel l'orifice d'admission (120, 220) est agencé, par rapport à une coupe transversale du corps (110, 210).

4. Capuchon d'étanchéité d'évent (1) selon la revendication 1, dans lequel l'organe d'ouverture/fermeture (140, 240) ouvre la connexion entre l'orifice d'admission (120, 220) et l'orifice d'échappement (130, 230) lorsque la pression de l'orifice d'admission (120, 220) est supérieure à une valeur préétablie, et
l'organe d'ouverture/fermeture (140, 240) ferme la connexion entre l'orifice d'admission (120, 220) et l'orifice d'échappement (130, 230) lorsque la pression de l'orifice d'admission (120, 220) est inférieure à la valeur préétablie.

5. Capuchon d'étanchéité d'évent (1) selon la revendication 1, dans lequel la rainure d'assistance à l'élévation (141, 241) est agencée dans une structure en épingle à cheveux comprenant une entrée, à travers laquelle le gaz est introduit, et une tête ayant une forme sphérique ayant un diamètre supérieur à une largeur de l'entrée.

6. Capuchon d'étanchéité d'évent (1) selon la revendication 1, dans lequel le corps (110, 210) a une coupe transversale ayant une forme circulaire.

7. Capuchon d'étanchéité d'évent (1) selon la revendication 6, dans lequel une rainure de guidage en spirale est formée dans une surface circonférentielle interne du corps (110, 210).

8. Capuchon d'étanchéité d'évent (1) selon la revendication 7, dans lequel une saillie de guidage en spirale est formée sur une surface circonférentielle externe de l'organe d'ouverture/fermeture (140, 240),
dans lequel la saillie de guidage est insérée dans la rainure de guidage du corps (110, 210) de manière à être élevé.

9. Capuchon d'étanchéité d'évent (1) selon la revendication 1, dans lequel l'orifice d'admission (120, 220) comprend un organe qui est contracté par absorption de chaleur.

10. Capuchon d'étanchéité d'évent (1) selon la revendication 1, dans lequel l'orifice d'échappement (130, 230) comprend un dispositif de génération d'alarme configuré pour générer un signal lors de la détection d'un flux du gaz.

11. Capuchon d'étanchéité d'évent (1) selon la revendication 1, dans lequel le corps (110, 210) comprend :
une partie mobile (211) ayant une surface en coupe transversale de la cavité, qui est identique à une surface en coupe transversale de l'organe d'ouverture/fermeture (140, 240), de sorte que l'organe d'ouverture/fermeture (140, 240) est mobile dans un état dans lequel la cavité est étanchéifiée ; et
une partie d'arrêt (212) agencée sous la partie mobile (211) et ayant une surface en coupe transversale de la cavité, qui est inférieure à la surface en coupe transversale de l'organe d'ouverture/fermeture (140, 240), de sorte que le mouvement de l'organe d'ouverture/fermeture (140, 240) est arrêté.

12. Capuchon d'étanchéité d'évent (1) selon la revendication 11, dans lequel l'orifice d'échappement (130, 230) est formé sur une surface latérale de la partie mobile (211), et
l'orifice d'admission (120, 220) est formé sur une surface latérale de la partie d'arrêt (212).

13. Capuchon d'étanchéité d'évent (1) selon la revendication 11, dans lequel l'orifice d'admission (120, 220) est formé sur une surface latérale de la partie mobile (211), et l'orifice d'admission (130, 230) est formé sur une surface inférieure de la partie d'arrêt (212).

14. Batterie secondaire comprenant :
un ensemble d'électrodes dans lequel sont empilés une électrode positive, un séparateur, une électrode négative, et un séparateur ;
un boîtier de batterie dans lequel l'ensemble d'électrodes est logé ; et
un capuchon d'étanchéité d'évent (1) selon l'une quelconque des revendications 1 à 13, agencé dans le boîtier de batterie.
